(19) Europäisches Patentamt
European Patent Office
Office européen des brevets

(11) **EP 3 658 998 B1**

(12) **FASCICULE DE BREVET EUROPEEN**

(45) Date de publication et mention de la délivrance du brevet:
**18.06.2025 Bulletin 2025/25**

(21) Numéro de dépôt: **18773792.9**

(22) Date de dépôt: **23.07.2018**

(51) Classification Internationale des Brevets (IPC):
**G05B 19/418** (2006.01) **B25J 9/16** (2006.01)

(52) Classification Coopérative des Brevets (CPC):
**G05B 19/41875; B25J 9/1697;** G01N 2021/9518;
G05B 2219/37206; G05B 2219/40617;
G05B 2219/50064; Y02P 90/02

(86) Numéro de dépôt international:
**PCT/FR2018/051888**

(87) Numéro de publication internationale:
**WO 2019/020924 (31.01.2019 Gazette 2019/05)**

(54) **PROCÉDÉ DE CONTRÔLE D'UNE SURFACE**

OBERFLÄCHENINSPEKTIONSVERFAHREN

SURFACE INSPECTION METHOD

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **24.07.2017 FR 1757011**

(43) Date de publication de la demande:
**03.06.2020 Bulletin 2020/23**

(73) Titulaire: **Safran**
**75015 Paris (FR)**

(72) Inventeurs:
• **MAILLARD, Samuel, Louis, Marcel, Marie**
**77550 MOISSY-CRAMAYEL (FR)**
• **SIRE, Nicolas**
**85190 La Genetouze (FR)**
• **BAZIN, Benoît**
**77550 MOISSY-CRAMAYEL (FR)**
• **CHARRIER, Grégory**
**85170 LE POIRE SUR VIE (FR)**
• **LECONTE, Nicolas**
**77550 MOISSY-CRAMAYEL (FR)**

(74) Mandataire: **Ernest Gutmann - Yves Plasseraud S.A.S.**
**C/o Plasseraud IP**
**104 Rue de Richelieu**
**CS 92104**
**75080 Paris Cedex 02 (FR)**

(56) Documents cités:
**FR-A1- 2 940 449 US-A1- 2002 169 586**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine du contrôle et plus particulièrement celui des applications de contrôle robotisé utilisant un capteur optique matriciel.

Dans l'industrie, il est connu d'embarquer des appareils de prise de vue tels que des capteurs optiques matriciels sur des robots. Pour de nombreuses applications, il est nécessaire de connaître précisément les positions des effecteurs embarqués sur les robots. Dans le cas d'un capteur optique, la position du centre optique de l'appareil de prise de vue sert de repère optique au robot.

Un exemple d'application courant est celui du contrôle d'une surface par thermographie. Sur des pièces de grandes dimensions, il est alors nécessaire de réaliser plusieurs acquisitions prises selon différents points de vue à l'aide d'une caméra infrarouge positionnée sur un bras robotisé.

Il est connu d'utiliser un contrôle par capteur matriciel (par exemple dans le domaine infrarouge) sur des pièces composites, mais principalement en laboratoire ou en production sur des surfaces présentant une géométrie relativement simple. Par géométrie relativement simple, on entend l'absence de courbures ou de variations de reliefs au niveau de la surface.

Le développement d'une méthode de contrôle de pièces de géométrie complexe dans des conditions industrielles nécessite la maitrise de :

- la zone visualisée par rapport à la position et à l'orientation du capteur matriciel embarqué sur un robot industriel,
- la conception de la trajectoire du robot en respectant des paramètres influant du procédé de contrôle.

La maîtrise de la zone de visualisation repose sur le positionnement précis de la surface à contrôler à une distance dite de mise au point donnée entre la surface et le centre optique de l'appareil de prise de vue, et selon une profondeur de champ de l'appareil de prise de vue.

La conception de la trajectoire du robot est souvent réalisée par apprentissage ou par des méthodes expérimentales directement sur la pièce à contrôler.

FR 2 940 449 A1 et US 2002 / 169 586 A1 divulguent des procédés similaires.

Il est proposé un procédé de contrôle selon la revendication 1.

Ce procédé permet de définir de manière automatique des points de passage pour le robot, et par suite une trajectoire prédéfinie lui permettant de déplacer successivement l'appareil de prise de vue au niveau des points d'acquisition. L'avantage de ce procédé est qu'il peut être réalisé entièrement dans un environnement virtuel tandis que la procédure habituelle consiste à créer une trajectoire par apprentissage expérimentale directement sur la pièce.

Selon l'invention, la génération du modèle virtuel tridimensionnel du volume de netteté comprend les opérations de :

- chargement, dans l'environnement virtuel, d'un modèle tridimensionnel de l'appareil,
- génération d'une pyramide tronquée dont :

   o le sommet est le centre optique C,
   o l'ouverture angulaire (ou cône d'ouverture) est celle de l'optique,
   o deux faces opposées définissent respectivement un premier plan net **PPN** et un dernier plan net **DPN** dont l'écartement correspond à la profondeur de champ **PC** de l'optique.

Ce modèle virtuel tridimensionnel de volume de netteté permet de représenter de manière simple et virtuelle les paramètres de l'optique. Il est directement lié aux caractéristiques de l'optique.

Selon l'invention, la surface est située entre le premier plan net **PPN** et le dernier plan net **DPN** de chaque modèle unitaire de modèle virtuel tridimensionnel du volume de netteté.

Ce positionnement particulier est facilité par l'utilisation d'un modèle virtuel tridimensionnel du volume de netteté, et permet de garantir une image nette à chaque acquisition lors du contrôle de la surface.

Selon l'invention, la génération du modèle virtuel tridimensionnel du volume de netteté comprend une opération de division dudit modèle virtuel tridimensionnel du volume de netteté en une zone de travail strictement incluse dans celui-ci, et une zone périphérique de recouvrement entourant la zone de travail. Dans l'opération de pavage, les modèles unitaires du modèle virtuel tridimensionnel du volume de netteté sont répartis de manière à se chevaucher deux à deux dans lesdites zones périphériques.

La génération d'une zone de travail permet de faciliter et d'accélérer le positionnement des volumes unitaires de volume de netteté. En effet la zone de travail permet de discriminer une zone de recouvrement dans laquelle les volumes unitaires se chevauchent. Cette opération permet également à l'opérateur d'avoir un contrôle sur le niveau de recouvrement souhaité.

Selon une caractéristique particulière, la position de chaque modèle unitaire du modèle virtuel tridimensionnel du volume de netteté est définie au moins par la distance **d** entre un point singulier **P** du modèle virtuel tridimensionnel de la surface à contrôler et sa projection orthogonale sur le premier plan net **PPN** ou sur le dernier plan net **DPN.** Cette caractéristique permet à l'opérateur d'avoir un contrôle sur la distance entre l'appareil et la surface à contrôler. En effet, selon les caractéristiques géométriques de la surface à contrôler, il peut être pertinent de mettre la distance **d** sous contrainte. Asservir cette distance permet de maîtriser la résolution spatiale des images visualisées.

Selon une autre caractéristique, le point singulier **P** peut être le barycentre du modèle virtuel tridimensionnel de volume de netteté.

Selon une caractéristique particulière, dans l'opération de pavage, la position de chaque modèle unitaire du modèle virtuel tridimensionnel du volume de netteté est définie par l'angle entre un axe **X** associé au modèle virtuel tridimensionnel du volume de netteté et la normale **N** à la surface d'intérêt au point d'intersection de l'axe **X** et de la surface. L'axe **X** est par exemple un axe de symétrie du modèle virtuel tridimensionnel du volume de netteté. Cette caractéristique permet à l'opérateur d'avoir un contrôle sur l'orientation angulaire de chaque modèle unitaire du modèle virtuel tridimensionnel du volume de netteté. Cela permet ainsi de contrôler l'orientation de la prise de vue sur certaines zones de la surface à contrôler.

L'invention sera mieux comprise et d'autres détails, caractéristiques et avantages de l'invention apparaîtront à la lecture de la description suivante faite à titre d'exemple non limitatif en référence aux dessins dans lesquels :

La **FIG.1** est une illustration d'un appareil de prise de vue monté sur un robot porteur au moyen d'un outillage.

La **FIG.2** est une vue en perspective d'un appareil de prise de vue monté sur un outillage, et du volume de netteté associé.

La **FIG.3** est une vue de côté d'un appareil de prise de vue monté sur un outillage, et du volume de netteté associé.

La **FIG.4** est une vue en perspective d'un exemple de volume de netteté.

La **FIG.5** est une vue de coté de l'exemple de volume de netteté de la **FIG.4.**

La **FIG.6** est une vue en perspective d'un exemple de surface à contrôler.

La **FIG.7** est une illustration de la surface de la **FIG.7** après l'opération de pavage.

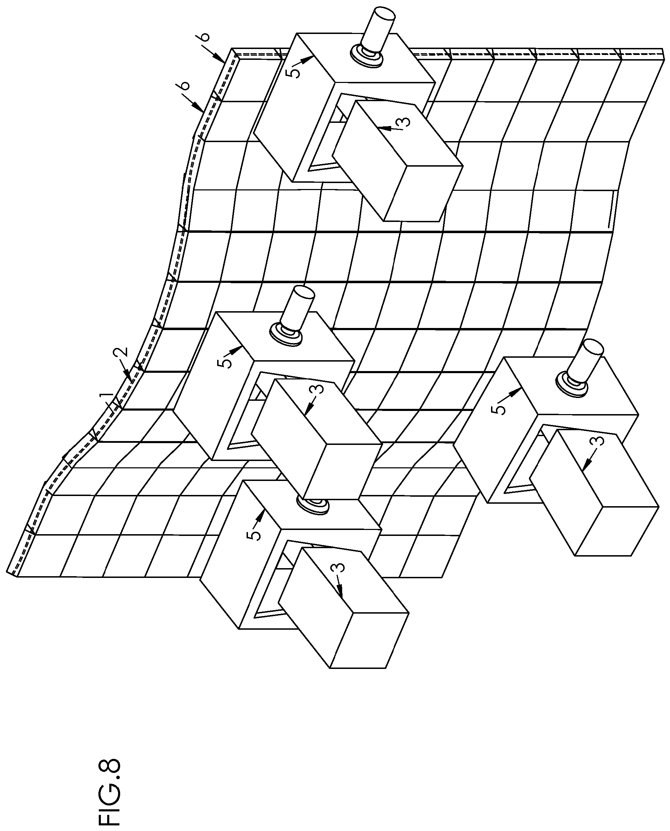

La **FIG.8** est une illustration du positionnement de l'appareil de prise de vue, pour chaque position d'un modèle unitaire du modèle virtuel tridimensionnel du volume de netteté.

La **FIG.9** illustre un exemple de positionnement d'un modèle unitaire du modèle virtuel tridimensionnel du volume de netteté par rapport à une surface en fonction d'une distance.

La **FIG.10** illustre un exemple de positionnement d'un modèle unitaire du modèle virtuel tridimensionnel du volume de netteté par rapport à une surface en fonction d'un angle.

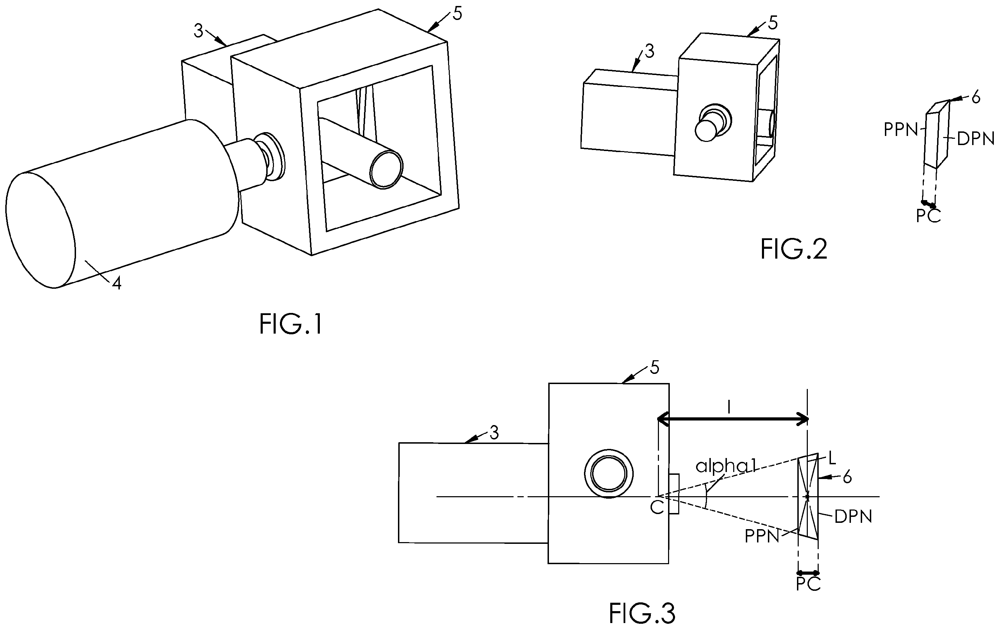

La présente invention porte sur un procédé de contrôle d'une surface **1** d'intérêt d'une pièce **2** au moyen d'un appareil de prise de vue **3** monté sur un robot porteur **4**. Le montage de l'appareil **3** sur le robot porteur **4** peut par exemple être réalisé au moyen d'un outillage **5** comme l'illustre la **FIG.1.**

La pièce **2** peut par exemple être une pièce mécanique.

L'appareil **3** comprend un capteur et une optique associée à un centre optique **C**, à une ouverture angulaire et à une profondeur de champs **PC** et définissant un volume de netteté **6,** comme l'illustre la **FIG.3.**

Ce procédé comprend les opérations de :

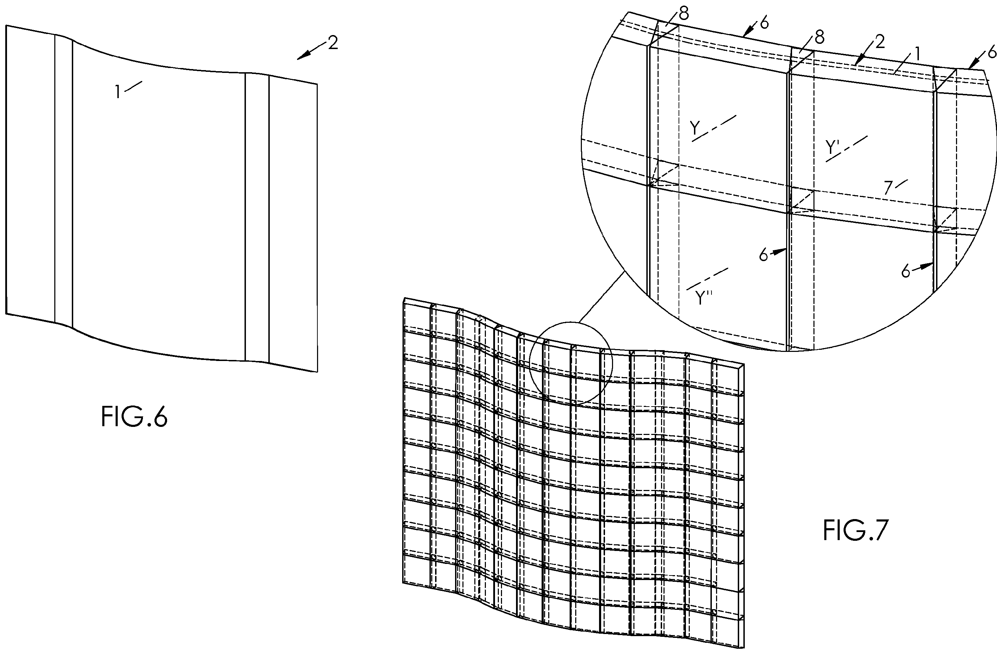

-     chargement, dans un environnement virtuel de conception (par exemple un environnement virtuel de dessin assisté par ordinateur), d'un modèle virtuel tridimensionnel de la surface **1** d'intérêt, comme l'illustre la **FIG.6**,
-     génération, dans l'environnement virtuel, d'un modèle virtuel tridimensionnel du volume de netteté **6,** comme l'illustre la **FIG.2**,
-     pavage, dans l'environnement virtuel, du modèle de la surface **1** d'intérêt au moyen d'une pluralité de modèles unitaires dudit modèle virtuel tridimensionnel du volume de netteté **6,** comme illustré dans la **FIG.7,**
-     pour chaque position desdits modèles unitaires du modèle virtuel tridimensionnel du volume de netteté **6,** calcul de la position correspondante, dite d'acquisition, de l'appareil de prise de vue **3**.

Pour chaque position desdits modèles unitaires, il est alors possible de calculer de manière automatique des points de passage pour le robot, et par suite une trajectoire prédéfinie lui permettant de déplacer successivement l'appareil de prise de vue au niveau des points d'acquisition.

Pour chaque position d'un modèle unitaire du modèle virtuel tridimensionnel du volume de netteté **6,** la position de l'axe optique de l'appareil **3** de prise de vue correspondante diffère. Sont représentés à titre d'exemples trois axes optiques, respectivement **Y, Y'** et **Y''** sur la **FIG.7.** Ils ne sont pas nécessairement parallèles entre eux car les modèles unitaires ne sont pas nécessairement orientés de la même manière par rapport à la surface **1.**

Selon l'invention, la génération du modèle virtuel tridimensionnel du volume de netteté **6** comprend les opérations de :

- chargement, d'un modèle tridimensionnel de l'appareil **3,**
- génération d'une pyramide tronquée dont :

  o le sommet est le centre optique **C** de l'appareil **3,**
  o l'ouverture angulaire est celle de l'optique, notée **alpha,**
  o deux faces opposées définissent respectivement un premier plan net **PPN** et un dernier plan net **DPN** dont l'écartement correspond à la profondeur de champ **PC** de l'optique.

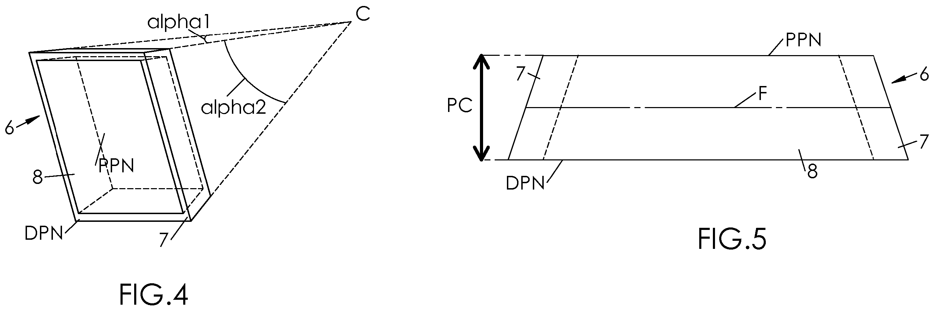

On pourra se référer à la **FIG.3** pour repérer les positions des premier plan net **PPN** et dernier plan net **DPN** du volume de netteté **6.** Les plans **PPN** et **DPN** sont situés de part et d'autre d'un plan L (appelé plan de mise au point) d'une distance de mise au point. Cette opération permet ainsi d'importer les caractéristiques géométriques de l'appareil **3** de prise de vue dans l'environnement virtuel. L'utilisation d'une pyramide tronquée permet d'intégrer facilement les positions les premier plan net **PPN** et dernier plan net **DPN**, et l'ouverture angulaire de l'optique. L'ouverture angulaire est représentée sur la **FIG.4** par un cône pyramidal à section rectangulaire, sur lequel on peut définir deux angles notés alpha1 et alpha2.L'angle alpha1 est défini par un premier triangle comprenant un bord de la section rectangulaire et le centre optique C, l'angle alpha2 étant défini par un second triangle adjacent au premier triangle et comprenant un bord de la section rectangulaire et le centre optique C.

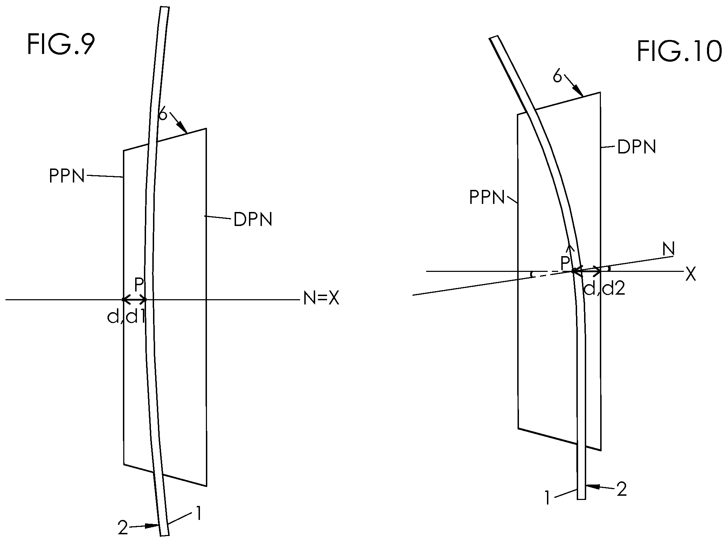

Selon l'invention, la surface **1** est située, lors du pavage, entre le premier plan net **PPN** et le dernier plan net **DPN** de chaque modèle unitaire du modèle virtuel tridimensionnel du volume de netteté **6,** comme illustré sur les **FIG.9** et **FIG.10.** Cette configuration permet de garantir, pour chaque position d'acquisition correspondante de chaque modèle unitaire du modèle virtuel tridimensionnel du volume de netteté **6,** la génération, par l'appareil de prise de vue **3,** d'une image nette.

Les caractéristiques géométriques de l'appareil de prise de vue **3** sont des données fournisseurs. On peut citer :

- les dimensions en pixels d'une image fournie par l'appareil **3** : le nombre $n_h$ de pixels horizontaux, le nombre $n_v$ de pixels verticaux,
- la distance **p** entre les centres de deux pixels adjacents sur le capteur,
- la distance de mise au point **l**,
- l'ouverture angulaire de l'optique.

La distance de mise au point **l** est définie par l'utilisateur. La géométrie du volume de netteté **6** peut être ajustée par un calcul permettant de gérer des zones de recouvrement **7**. Chaque position d'un modèle unitaire du modèle virtuel tridimensionnel du volume de netteté **6** sur la surface **1** correspond à une position de prise de vue.

Ainsi, au cours de cette opération, la génération du modèle virtuel tridimensionnel du volume de netteté **6** comprend en outre une opération de division du modèle virtuel tridimensionnel du volume de netteté **6** en une zone de travail **8** strictement incluse dans celui-ci, et une zone périphérique **7** de recouvrement **7** entourant la zone de travail **8.** Un exemple de volume de netteté **6** divisé en une zone de travail **8** et une zone de recouvrement **7** est illustré en **FIG.4** et en **FIG.5.** Notez qu'il s'agit là d'un exemple et que les zones de recouvrement peuvent avoir une géométrie et des dimensions différentes de celle représentée dans les **FIG.4 et FIG.5.**

La géométrie et les dimensions de la zone de travail **8** sont régies par la géométrie du volume de netteté **6** généré et un paramètre portant sur le pourcentage de recouvrement désiré dans chaque image. Ce paramètre peut être modulé par un opérateur. Cette étape de division permet de gérer facilement le niveau de recouvrement désiré entre deux acquisitions.

Pour chaque type de capteur, des équations permettent de calculer les dimensions de la zone de travail **8.**

A titre d'exemple les équations suivantes sont données pour des applications dans le domaine du visible et en particulier dans le cas de l'utilisation de capteurs argentiques.

Le calcul de la zone de travail à une distance **l** de mise au point est régie par les équations (1) et (2) qui permettent de calculer respectivement les champs de vision horizontal HFOV (« horizontal field of view » en anglais) et vertical VFOV (« vertical field of view » en anglais) en millimètres:

$$HFOV = \frac{l_h}{f}.l \; avec \; l_h =.n_h.p \qquad (1)$$

$$VFOV = \frac{l_v}{f}.l \; avec \; l_v = n_v.p \qquad (2)$$

$n_h$ étant le nombre de pixels horizontaux, $n_v$ le nombre de pixels verticaux et p la distance entre les centres de deux pixels adjacents sur les images acquise.

La profondeur de champs **PC** est la différence entre la distance de **C** au dernier plan net **DPN,** notée [*C,DPN*], et la distance de **C** au premier plan net **PPN,** notée [*C,PPN*], comme l'illustre l'équation (3) :

$$PC = [C, DPN] - [C, PPN] \qquad (3)$$

Les équations permettant de déterminer les distances [*C,DPN*] et [*C,PPN*] varient en fonction du capteur. Par exemple pour un appareil argentique, ces distances sont calculées par les équations (4) et (5) dans lesquelles D est la diagonale du capteur calculée par l'équation (6), *c* est le périmètre du cercle de confusion définie par l'équation (7), et H est la distance hyperfocale :

$$[C, DPN] = \frac{H.l}{H-l} \qquad (4)$$

$$[C, PPN] = \frac{H.l}{H+l} \qquad (5)$$

$$D = \sqrt{(n_h.p)^2 + (n_v.p)^2} \qquad (6)$$

$$c = \frac{D}{1730} \qquad (7)$$

$$H = \frac{f^2}{N.c} \qquad (8)$$

Les variables calculées par les équations (4) à (8) peuvent varier selon le type de capteur utilisé. Elles sont données ici à titre d'exemple.

Dans le cas où l'opérateur a sélectionné un pourcentage de recouvrement non nul, les positions du volume de netteté **6** sont définies de manière à se chevaucher deux à deux dans les zones de recouvrement **7** au cours de l'opération de pavage de la surface **1.** Un exemple de chevauchement entre les volumes de netteté **6** est illustré dans la **FIG.7.**

L'utilisation d'un volume de netteté permet une maitrise de la zone de visualisation et facilite l'intégration de certaines contraintes telles que la distance entre l'appareil de prise de vue **3** et la surface **1,** la normalité à la surface, le centrage sur un point particulier de la surface **1,** la maitrise des zones de travail **8** et de recouvrement **7.**

Selon une caractéristique particulière, la position de chaque modèle unitaire du modèle virtuel tridimensionnel du volume de netteté **6** est définie au moins par une distance **d** qui peut être la distance **d1** entre un point singulier **P** du modèle tridimensionnel de la surface **1** d'intérêt et sa projection orthogonale sur le plan PPN, comme représenté sur la **FIG.9.** Cette distance peut également être la distance **d2** entre ce point **P** et sa projection orthogonale sur le dernier plan **DPN** comme représenté sur la **FIG.10.** Selon un exemple de mode de réalisation, dans l'opération de pavage, la position de chaque modèle unitaire du modèle virtuel tridimensionnel du volume de netteté **6** peut également être définie, par l'angle entre un axe **X** associé au modèle virtuel tridimensionnel du volume de netteté **6** et la normale **N** à la surface **1** d'intérêt au point d'intersection de l'axe **X** et de la surface **1.** Ce cas de figure est illustré par la **FIG.10.** Dans le cas particulier de la **FIG.9,** cet angle est nul car la normale **N** est confondue avec l'axe **X.** L'axe **X** peut par exemple être un axe de symétrie du modèle virtuel tridimensionnel du volume de netteté, comme illustré sur les **FIG.9** et **FIG.10.** En effet il est essentiel de connaître cette orientation angulaire car la position et l'orientation du robot sont données par rapport au repère de la pièce.

## Revendications

1. Procédé de contrôle d'une surface **(1)** d'intérêt d'une pièce **(2)** au moyen d'un appareil **(3)** de prise de vue destiné à être monté sur un robot **(4)** porteur, l'appareil **(3)** comprenant un capteur et une optique associée à un centre optique **(C),** à une ouverture angulaire **alpha** et à une profondeur de champs **(PC)** et définissant un volume de netteté **(6),** ce procédé comprenant les opérations suivantes :

   a) chargement, dans un environnement virtuel de conception, d'un modèle virtuel tridimensionnel de la surface **(1)** d'intérêt,

b) génération, dans l'environnement virtuel, d'un modèle virtuel tridimensionnel du volume de netteté **(6),**

c) pavage, dans l'environnement virtuel, du modèle de la surface **(1)** d'intérêt au moyen d'une pluralité de modèles unitaires dudit modèle virtuel tridimensionnel du volume de netteté **(6),**

d) pour chaque position desdits modèles unitaires **(6),** calcul de la position correspondante, dite d'acquisition, de l'appareil **(3)** de prise de vue,

procédé dans lequel la génération du modèle tridimensionnel du volume de netteté **(6)** comprend les opérations de :

- chargement, dans l'environnement virtuel, d'un modèle tridimensionnel de l'appareil **(3)** et de son outillage **(5),**
- génération d'une pyramide tronquée dont :

  o le sommet est le centre optique **(C),**
  o l'ouverture angulaire est celle de l'optique notée **alpha,**
  o deux faces opposées définissent respectivement un premier plan net **(PPN)** et un dernier plan net **(DPN)** dont l'écartement correspond à la profondeur de champ **(PC)** de l'optique.

procédé dans lequel la surface **(1)** est située entre le premier plan net **(PPN)** et le dernier plan net **(DPN)** de chaque modèle unitaire de modèle de volume de netteté **(6),**

procédé dans lequel la génération du modèle virtuel tridimensionnel du volume de netteté **(6)** comprend une opération de division du modèle de volume de netteté **(6)** en une zone de travail **(8)** strictement incluse dans celui-ci, et une zone périphérique **(7)** de recouvrement entourant la zone de travail **(8)** ; et en ce que dans l'opération de pavage, les modèles unitaires de modèle de volume de netteté **(6)** sont réparties de manière à se chevaucher deux à deux dans lesdites zones périphériques **(7).**

2. Procédé selon la revendication 1, dans lequel dans l'opération de pavage, la position de chaque modèle unitaire du modèle virtuel tridimensionnel de volume de netteté **(6)** est définie au moins par la distance **d** entre un point singulier **P** du modèle tridimensionnel de la surface **(1)** d'intérêt et sa projection orthogonale sur un des plans **(PPN)** ou **(DPN).**

3. Procédé selon la revendication 2, dans lequel le point singulier **P** est le barycentre du modèle virtuel tridimensionnel de volume de netteté.

4. Procédé selon l'une des revendications précédentes, dans lequel dans l'opération de pavage, la position de chaque modèle unitaire de volume de netteté **(6)** est définie par l'angle entre un axe **X** associé au modèle de volume de netteté et la normale **N** à la surface **(1)** d'intérêt au point d'intersection de l'axe **X** et de la surface **(1).**

5. Procédé selon la revendication 4 dans lequel l'axe **X** est un axe de symétrie du modèle de volume de netteté **(6).**

**Patentansprüche**

1. Verfahren zur Prüfung einer interessierenden Oberfläche (1) eines Bauteils (2) mittels eines Bildaufnahmegeräts (3), das dazu bestimmt ist, an einem Trägerroboter (4) angebracht zu werden, wobei das Gerät (3) einen Sensor und eine Optik umfasst, der ein optisches Zentrum (C), eine Winkelöffnung alpha und eine Schärfentiefe (PC) zugeordnet sind und die ein Schärfevolumen (6) definiert, wobei dieses Verfahren die folgenden Schritte umfasst:

a) Laden eines dreidimensionalen virtuellen Modells der interessierenden Oberfläche (1) in eine virtuelle Entwurfsumgebung,

b) Erzeugen eines dreidimensionalen virtuellen Modells des Schärfevolumens (6) in der virtuellen Umgebung,

c) Kacheln des Modells der interessierenden Oberfläche (1) in der virtuellen Umgebung mittels einer Vielzahl von Einheitsmodellen des dreidimensionalen virtuellen Modells des Schärfevolumens (6),

d) für jede Position der Einheitsmodelle (6), Berechnen der entsprechenden Position, der sogenannten Erfassungsposition, des Bildaufnahmegeräts (3),

wobei bei dem Verfahren die Erzeugung des dreidimensionalen Modells des Schärfevolumens (6) folgende Schritte umfasst:

- Laden eines dreidimensionalen Modells des Geräts (3) und seiner Werkzeuge (5) in die virtuelle Umgebung,

- Erzeugen einer Kegelstumpfpyramide, bei welcher

• die Spitze das optische Zentrum (C) ist,
• die Winkelöffnung derjenigen der Optik entspricht, mit alpha bezeichnet,
• zwei gegenüberliegende Seiten jeweils eine erste Schärfeebene (PPN) bzw. eine letzte Schärfeebene (DPN) definieren, deren Abstand der Schärfentiefe (PC) der Optik entspricht,

wobei bei dem Verfahren die Oberfläche (1) zwischen der ersten Schärfeebene (PPN) und der letzten Schärfeebene (DPN) jedes Einheitsmodells des Schärfevolumenmodells (6) liegt,
wobei bei dem Verfahren die Erzeugung des dreidimensionalen virtuellen Modells des Schärfevolumens (6) einen Schritt des Unterteilens des Schärfevolumenmodells (6) in einen strikt darin enthaltenen Arbeitsbereich (8) und einen den Arbeitsbereich (8) umgebenden Abdeckungsumfangsbereich (7) umfasst; und wobei bei dem Schritt des Kachelns die Einheitsmodelle des Schärfevolumenmodells (6) so verteilt werden, dass sie sich paarweise in den Umfangsbereichen (7) überlappen.

2. Verfahren nach Anspruch 1,
wobei bei dem Schritt des Kachelns die Position jedes Einheitsmodells des virtuellen dreidimensionalen Schärfevolumenmodells (6) zumindest durch den Abstand **d** zwischen einem singulären Punkt **P** des dreidimensionalen Modells der interessierenden Oberfläche (1) und seiner orthogonalen Projektion auf eine der Ebenen (PPN) oder (DPN) definiert wird.

3. Verfahren nach Anspruch 2,
wobei der singuläre Punkt **P** das Baryzentrum des virtuellen dreidimensionalen Modells des Schärfevolumens ist.

4. Verfahren nach einem der vorhergehenden Ansprüche,
wobei bei dem Schritt des Kachelns die Position jedes Schärfevolumeneinheitsmodells (6) durch den Winkel zwischen einer dem Schärfevolumenmodell zugeordneten X-Achse und der Normalen N zu der interessierenden Oberfläche (1) an dem Schnittpunkt der X-Achse und der Oberfläche (1) definiert wird.

5. Verfahren nach Anspruch 4, wobei die X-Achse eine Symmetrieachse des Schärfevolumenmodells (6) ist.

**Claims**

1. A method for controlling a surface **(1)** of interest of a part **(2)** by means of a camera **(3)** intended to be mounted on a carrying robot **(4)**, the camera **(3)** comprising a sensor and optics associated with an optical centre **(C)**, with an angular aperture **alpha** and with a depth of field **(PC)** and defining a sharpness volume **(6)**, the method comprising the following operations:

a) loading, in a virtual design environment, a three-dimensional virtual model of the surface **(1)** of interest,
b) generating, in the virtual environment, a three-dimensional virtual model of the sharpness volume **(6)**,
c) paving, in the virtual environment, the model of the surface **(1)** of interest by means of a plurality of unit models of said three-dimensional virtual model of the sharpness volume **(6)**,
d) for each position of said unit models **(6)**, calculating the corresponding position, called the acquisition position, of the camera **(3)**,
the method wherein the generation of the three-dimensional model of the sharpness volume **(6)** comprises the operations of:

- loading, in the virtual environment, a three-dimensional model of the camera **(3)** and its tooling **(5)**,
- generating a truncated pyramid of which:

o the top is the optical centre **(C)**,
o the angular aperture is that of the optics noted **alpha,**
o two opposing faces each define a first sharp plane **(PPN)** and a last sharp plane **(DPN)**, the spacing of which corresponds to the depth of field **(PC)** of the optics,

the method wherein the surface **(1)** is located between the first sharp plane **(PPN)** and the last sharp plane **(DPN)** of each unit model sharpness volume model **(6)**,

the method in which the generation of the three-dimensional virtual model of the sharpness volume **(6)** comprises an operation of dividing the sharpness volume model **(6)** into a working area **(8)** strictly included therein, and a peripheral overlapping area **(7** ) surrounding the working area **(8)**; and in that in the paving operation, the unit models of the sharpness volume model **(6)** are distributed so as to overlap two by two in said peripheral areas **(7).**

2. A method according to claim 1, wherein in the paving operation, the position of each unit model of the three-dimensional virtual model of volume of sharpness **(6)** is defined at least by the distance **d** between a singular point **P** of the three-dimensional model of the surface **(1)** of interest and its orthogonal projection on one of the planes **(PPN)** or **(DPN).**

3. A method according to claim 2, wherein the singular point **P** is the barycenter of the three-dimensional virtual model of volume of sharpness.

4. A method according to one of the preceding claims, wherein in the paving operation, the position of each unitary sharpness volume model **(6)** is defined by the angle between an **X-axis** associated with the sharpness volume model and the normal **N** to the surface **(1)** of interest at the point of intersection of the **X-axis** and the surface **(1).**

5. A method according to claim 4, wherein the **X-axis** is an axis of symmetry of the sharpness volume model **(6).**

FIG.1

FIG.2

FIG.3

FIG.4

FIG.5

EP 3 658 998 B1

FIG.7

FIG.6

FIG.8

FIG.9

FIG.10

EP 3 658 998 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2940449 A1

- US 2002169586 A1